# DEMANDE DE BREVET EUROPEEN

(11) **EP 3 882 835 A1**
(43) Date de publication de la demande: **22.09.2021**
(21) Numéro de dépôt: 21153867.3
(22) Date de dépôt: 27.01.2021
(51) Int. Cl.: G06Q 10/08

(54) **SYSTÈME D ACHEMINEMENT D'UN OBJET METTANT EN UVRE UN COLIS CARGO TRANSPORTANT UN COLIS PASSAGER, AVEC DÉTECTION AUTOMATIQUE DE LA DESTINATION DU COLIS PASSAGER**

(30) Priorité: 18.03.2020 FR 2002661
(71) Demandeur: KeoPack, 75008 Paris (FR)
(72) Inventeur: ROZEE, Pascal, 60810 RULLY (FR); KERMAIDIC, Patrick, 31000 TOULOUSE (FR)
(74) Mandataire: Lequien, Philippe

(57) **Abrégé**

L'invention concerne un système d'acheminement d'un objet, mettant en oeuvre :
- au moins un colis passager (2) comprenant un contenant (20) et des moyens de fermeture (21) pouvant adopter, avec le contenant, une configuration de fermeture ou une configuration d'ouverture, le colis passager comprenant également un dispositif de détection (22) de la configuration de fermeture ou d'ouverture du colis passager,
- un colis cargo (1) apte à contenir le ou les colis passagers (2) et présentant un dispositif d'affichage (10) électronique consultable depuis l'extérieur du colis cargo (1), et incluant une unité informatique (11) paramétrée pour transmettre des consignes d'affichage au dispositif d'affichage (10) électronique,
caractérisé en ce que le ou les colis passagers (2) portent au moins une radio-étiquette (23) contenant une information d'adresse postale à laquelle l'objet est destiné,
et en ce que le colis cargo (1) comprend un émetteur-récepteur de proximité (12), apte à communiquer avec la radio-étiquette (23) et étant paramétré pour lire l'information d'adresse postale, l'unité électronique (11) du colis cargo (1) étant apte à coopérer avec dispositif de détection (22) du ou des colis passager (2), l'unité informatique (11) étant paramétrée pour autoriser un affichage, par le dispositif d'affichage (10), de l'information d'adresse postale à réception, par l'unité informatique, d'une information de fermeture par le dispositif de détection (22), le colis cargo intégrant un moyen de calage et/ou de maintien du colis passager.

## Description

Le domaine de l'invention est celui de la conception et de la fabrication d'équipements dédiés à la logistique.

Plus précisément, l'invention concerne l'acheminement d'objets, et en particulier celui d'objets généralement issus de plateformes de commerce électronique ou transférés d'un particulier à un autre.

Dans le domaine de l'invention, l'acheminement d'objets par les plateformes de commerce électronique s'opère très souvent en disposant le ou les objets à acheminer dans un colis pourvu, aux fins de l'acheminement, d'une étiquette présentant au moins un code visuel, prenant notamment la forme d'un code-barres imprimé. Ce code permet d'identifier le colis par chacun des acteurs intervenant dans l'acheminement du colis, et fournit généralement une adresse postale à laquelle l'objet est destiné à être remis.

Dans le domaine de l'acheminement d'objets, il est une thématique qui concerne la réexpédition de produits, ou plus largement d'objets, en vue de leur recyclage et/ou de leur élimination.

A ce titre, on peut citer notamment :
- les capsules de café usagées ;
- certains équipements médicaux, tels que des seringues ;
- des médicaments périmés ;

Actuellement, pour certains de ces objets devant être réexpédiés, il est constaté, et même déploré, que les usagers de ces objets ne prennent pas le temps ou ne font pas l'effort de renvoyer ces objets à l'opérateur en charge de leur recyclage ou de leur élimination.

Il existe donc un besoin en termes d'incitation des usagers des objets devant être réexpédiés à procéder à leur réexpédition.

Parallèlement, récemment, des colis connectés ont fait leur apparition. Ces colis sont équipés d'un dispositif d'affichage électronique visible de l'extérieur du colis et destiné à afficher une adresse postale d'expédition et éventuellement plusieurs autres types d'information. Les dispositifs d'affichage de ces colis peuvent être programmés pour permettre à l'utilisateur du colis d'activer une réexpédition du colis à un lieu de dépôt prédéterminé, l'adresse de dépôt étant alors affiché sur le dispositif d'affichage électronique.

De plus, compte tenu de leur coût, ces colis « connectés » sont réalisés dans des matériaux résistant aux différentes manipulations (ouverture, fermeture, mise en forme...) et aux différents chocs susceptibles d'intervenir pendant leur phase de transport. De cette façon, ces colis sont conçus pour être réutilisés de très nombreuses fois.

Actuellement, de tels colis ne sont pas utilisés dans un contexte d'incitation à la réexpédition d'objets tels que ceux mentionnés précédemment.

De plus, certains objets à recycler ou à éliminer peuvent présenter des caractéristiques physiques de nature à détériorer et/ou salir le colis qui les transporte. En effet, certains objets peuvent avoir des formes de nature à abimer les parois internes du colis (objets avec des arêtes saillantes, voire coupantes, seringues...) ou à les salir (objets gras, objets dégoulinants...). Il est alors bien évident que ceci est contraire à l'objectif de réutilisations multiples des colis connectés réutilisables.

L'invention a notamment pour objectif de pallier les inconvénients ou insuffisances de l'art antérieur.

Plus précisément, l'invention a pour objectif de proposer un système d'acheminement d'objets à l'aide de colis connectés réutilisables qui préservent l'intégrité du colis y compris avec des objets transportés agressifs pour le colis ou salissants.

L'invention a également pour objectif de fournir un tel système qui incite les consommateurs à retourner des objets à recycler ou à éliminer à destination d'un lieu de dépôt prédéterminé.

L'invention a encore pour objectif de fournir un tel système qui soit simple d'utilisation pour les utilisateurs.

Ces objectifs, ainsi que d'autres qui apparaîtront par la suite, sont atteints grâce à l'invention qui a pour objet un système d'acheminement d'un objet, mettant en œuvre :
- au moins un colis passager comprenant un contenant et des moyens de fermeture pouvant adopter, avec le contenant, une configuration de fermeture ou une configuration d'ouverture, le colis passager comprenant également un dispositif de détection de la configuration de fermeture ou d'ouverture du colis passager,
- un colis cargo apte à contenir le ou les colis passagers et présentant un dispositif d'affichage électronique consultable depuis l'extérieur du colis cargo, et incluant une unité informatique paramétrée pour transmettre des consignes d'affichage au dispositif d'affichage électronique,
caractérisé en ce que le ou les colis passagers portent au moins une radio-étiquette contenant une information d'adresse postale à laquelle l'objet est destiné, et en ce que le colis cargo comprend un émetteur-récepteur de proximité, apte à communiquer avec la radio-étiquette et étant paramétré pour lire l'information d'adresse postale, l'unité électronique du colis cargo étant apte à coopérer avec le dispositif de détection du ou des colis passager et étant reliée au dispositif d'affichage, l'unité électronique étant paramétrée pour autoriser un affichage, par le dispositif d'affichage, de l'information d'adresse postale à réception d'une information de fermeture par le dispositif de détection, le colis cargo intégrant un moyen de calage et/ou de maintien du colis passager.

Ainsi, grâce à l'invention, on peut transporter dans un colis connecté réutilisable, désigné ci-dessus par les termes « colis cargo », des objets susceptibles d'être agressifs ou salissants pour le colis cargo. L'intégrité matérielle du colis cargo est ainsi préservée, et sa capacité à être réutilisé de multiples fois, sans nécessiter d'entretien ou de maintenance, est conservée.

En effet, les produits susceptibles d'être agressifs ou salissants pour le colis cargo sont confinés à l'intérieur du « colis passager » (ou des colis passagers, s'il y en a plusieurs disposés dans le colis cargo), qui constitue de la sorte une enceinte de protection pour le volume interne du colis cargo.

En outre, les colis passagers sont programmés, par l'intermédiaire de la radio étiquette qui leur est associée, avec des données d'adresse postale correspondant à un lieu de collecte dédié au processus de recyclage ou d'élimination des objets destinés à être contenus dans le colis passager. Ces données sont communiquées au colis cargo qui affiche, sur le dispositif d'affichage, l'adresse postale avec laquelle le colis passager a été programmé (par l'intermédiaire de l'apposition sur le colis passager de la radio-étiquette contenant les données d'adresse de destination).

On note que cet affichage n'est autorisé que si le ou les colis passagers sont correctement fermés. En d'autres termes, on s'assure que les objets contenus dans les colis passagers ne vont pas s'extraire de ce dernier, ce qui anéantirait l'objectif de protection du colis cargo, puisque les objets pourraient alors être en contact direct avec le volume interne du colis cargo.

Par ailleurs, un système d'acheminement selon l'invention peut s'avérer revêtir une dimension d'incitation à la réexpédition d'objets devant être recyclés ou éliminés. En effet, un objet de ce type peut être délivré à un consommateur avec le colis passager programmé avec l'adresse de réexpédition correspondant à l'objet en question. Il suffit alors au consommateur de stocker les objets consommés dans un colis passager, puis de placer ce dernier correctement fermé dans un colis cargo, ceci avec un minimum de contraintes et en très peu de temps.

Selon une première solution avantageuse, l'émetteur-récepteur de proximité est un lecteur RFID.

Selon une deuxième solution avantageuse, l'émetteur-récepteur de proximité est un lecteur NFC.

Dans l'un ou l'autre cas, ce type d'émetteur-récepteur de proximité est très courant et peut donc être implémenté de façon peu onéreuse et en grande série.

Selon une première approche, le dispositif de détection est mécanique.

Selon une deuxième approche, le dispositif de détection est électronique.

Selon une solution préférentielle, le ou les colis passagers sont hermétiques dans leur configuration de fermeture.

Ainsi, il est possible de transporter un ou plusieurs produits susceptibles de diffuser un liquide plus ou moins salissant, comme c'est le cas par exemple avec des capsules de café usagées. Toute salissure liquide est donc confinée dans le colis passager, et ne porte pas atteinte l'intégrité du volume interne du colis cargo.

Selon une solution avantageuse, le colis passager comprend au moins un capteur de données complémentaires parmi lesquelles :
- une température dans le colis passager ;
- un poids du ou des objets ;
- un degré d'hygrométrie dans le colis passager ;
- une pression dans le colis passager ;
- un choc subi par le colis passager ;
- un signal d'ouverture du colis passager.

Avec de telles données complémentaires, il est possible de vérifier les conditions de transport du ou des objets, et donc de contrôler si la bonne conservation du ou des objets est assurée. De telles données complémentaires peuvent également servir à vérifier que le colis passager n'est pas dégradé ou ouvert, et donc à vérifier si le ou les objets ne se répandent pas à l'intérieur du colis cargo au risque de dégrader ou de détériorer le colis cargo.

Selon un mode de réalisation avantageux, le colis cargo comprend des moyens de communication, l'unité informatique étant paramétrée pour collecter les données complémentaires et émettre, à destination d'une unité distante et, par l'intermédiaire des moyens de communication, les données complémentaires.

D'autres caractéristiques et avantages de l'invention apparaîtront à la lecture de la description suivante d'un mode de réalisation préférentiel et de plusieurs de ses variantes, donnés à titre de simple exemple illustratif et non limitatif, et des dessins annexés parmi lesquels :
La figure 1 est une représentation schématique d'un colis cargo d'un système d'acheminement d'objets selon l'invention.
La figure 2 est une représentation schématique d'un colis passager pour un système d'acheminement d'objets selon l'invention, selon une première variante de réalisation ;
Les figures 3 à 6 sont chacune une représentation schématique d'une variante de réalisation d'un colis passager pour un système d'acheminement d'objets selon l'invention.

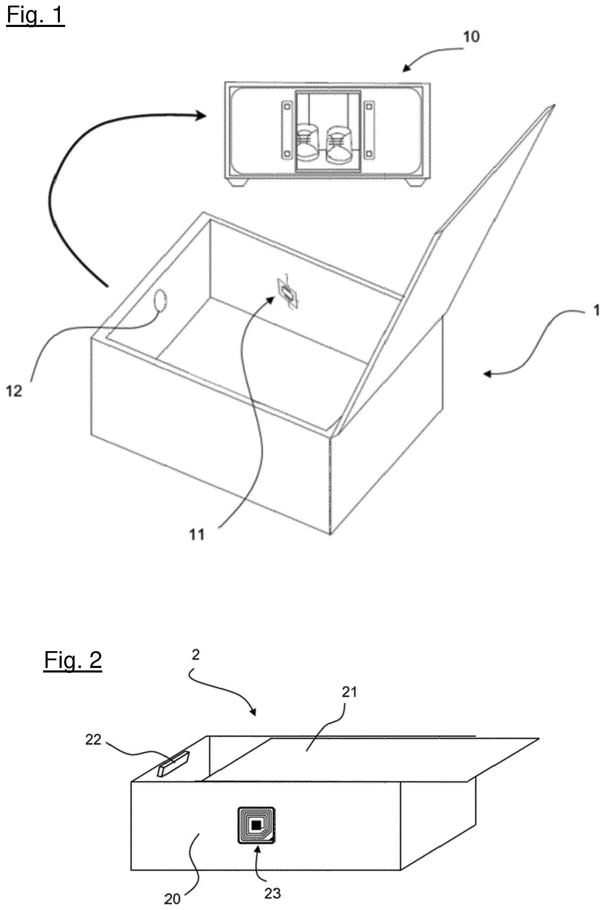

Tel qu'illustré par les figures 1 et 2, un système d'acheminement selon l'invention met en œuvre :
- un colis cargo 1 présentant sur l'une de ses faces externes un dispositif d'affichage électronique 10 (figure 1) ;
- un colis passager 2, ou plusieurs, (figure 2) comprenant un contenant 20 et des moyens de fermeture 21 pouvant adopter, avec le contenant, une configuration de fermeture ou une configuration d'ouverture.

On note qu'on entend par « colis cargo » un paquet emballé et portant les nom et adresse du destinataire de façon à être acheminé par des services postaux ou par un service de livraison expresse (transport routier ou autre) à son destinataire. Il en résulte qu'un « colis cargo » au sens de l'invention à des dimensions correspondant aux colis tels que définis précédemment, ou proches de ces dimensions. Il en va bien sûr de même pour les « colis passagers » puisque ceux-ci sont dimensionnés de façon à pouvoir être contenus dans les « colis cargo ».

Il est toutefois envisageable, sans sortir du cadre de l'invention, de mettre en oeuvre des colis cargos de plus grandes dimensions de telle sorte qu'ils puissent contenir plusieurs colis passagers.

Des boîtes ou des cartons sont classiquement employés pour former de tels colis.

Dans le colis passager 2, un dispositif de détection 22 permet de détecter la configuration de fermeture ou celle d'ouverture du colis passager. Comme cela va être expliqué ci-après, une information sur la configuration du colis passager (ouverture ou fermeture) est émise par le dispositif de détection.

Le colis cargo 1 est dimensionné en fonction de la forme et des dimensions du ou des colis passagers, de telle sorte que le colis cargo est apte à contenir le ou les colis passagers.

De plus, le colis cargo inclut une unité informatique 11 paramétrée pour transmettre des consignes d'affichage au dispositif d'affichage électronique 10. Par ailleurs, bien que ces moyens ne soient pas représentés sur la figure 1, le colis cargo intègre, selon le principe de l'invention, tout moyen (au moins un moyen) adapté au calage et/ou au maintien du colis passager une fois celui-ci disposé dans le colis cargo.

Selon le principe de l'invention, un colis passager porte une radio étiquette 23, voire plusieurs, cette radio étiquette étant programmée avec des données comprenant une adresse postale à laquelle l'objet contenu dans le colis passager est destiné.

De plus, le colis cargo 1 comprend un émetteur-récepteur de proximité 12, apte à communiquer avec la radio étiquette 23 du colis passager. Selon un principe de fonctionnement connu, cet émetteur-récepteur de proximité est paramétré pour lire le contenu de la radio étiquette 23, en l'occurrence l'information d'adresse postale.

L'unité électronique 11 du colis cargo est de plus apte à coopérer avec le dispositif de détection du colis passager, pour recevoir l'information émise par le dispositif de détection quant à la configuration d'ouverture ou de fermeture du colis passager.

Ainsi, à réception par l'unité électronique du colis cargo d'une information de fermeture par le dispositif de détection, l'unité électronique 11, reliée au dispositif d'affichage 10, est paramétrée pour autoriser un affichage, par le dispositif d'affichage électronique 10, de l'information d'adresse postale contenue dans la radio étiquette 23.

En d'autres termes, selon le principe de l'invention, une fois le colis passager disposé dans le colis cargo, l'unité électronique du colis cargo détecte si le colis passager est en configuration de fermeture. Si tel est le cas, l'information de la radio étiquette lue par l'émetteur-récepteur de proximité du colis cargo est communiquée à l'unité électronique qui la transmet, pour affichage, au dispositif d'affichage électronique consultable de l'extérieur du colis cargo.

Le colis cargo est ainsi configuré automatiquement avec l'adresse de destination de l'objet correspondant au colis passager dans lequel l'objet est disposé.

Un exemple d'usage, appliqué aux capsules de café, est explicité ci-après.

Dans cet exemple, les capsules de café neuves sont envoyées au consommateur en étant disposées dans un colis passager, lui-même intégré à un colis cargo. Il retire, pour rangement, les capsules neuves du colis passager et renvoie, ou non, le colis cargo à l'expéditeur. Au fur et à mesure de la consommation des capsules, le consommateur dispose les capsules usagées dans le colis passager. Une fois le colis passager plein, il referme le colis passager et le repositionne dans le colis cargo qu'il aura conservé (ou émet une requête via, par exemple, une application sur son ordiphone pour recevoir un nouveau colis cargo). Une fois le colis passager correctement fermé et positionné dans le colis cargo, ce dernier reconnait le colis passager et l'adresse postale de destination du colis cargo s'affiche automatiquement sur le dispositif d'affichage électronique du colis cargo.

Eventuellement, une fois le colis cargo arrivé à destination, un message automatique peut être envoyé au consommateur pour lui indiquer que les capsules sont arrivées à destination et seront recyclées.

S'agissant de l'émetteur-récepteur de proximité intégré au colis cargo, celui-ci peut être un lecteur de type RFID ou de type NFC.

Le dispositif de détection du colis passager peut être du type mécanique (en étant toutefois couplé à un composant électronique apte à transmettre une information de fermeture à l'unité électronique du colis cargo).

Préférentiellement, le dispositif de détection est de type électronique, mettant en oeuvre un switch (ou commutateur électronique) ou un capteur à effet Hall, connecté à l'unité électronique du colis cargo, ceci par l'envoi d'un signal à l'unité électronique relatif à la configuration de fermeture ou d'ouverture du colis passager.

Par ailleurs, le ou les colis passagers sont hermétiques dans leur configuration de fermeture. Pour cela, il peut intégrer un système de joint sur le contenant et/ou sur les moyens de fermeture.

Comme indiqué précédemment, le maintien de la configuration de fermeture du colis passager est contrôlé tout au long de l'acheminement du colis cargo. Si un problème d'étanchéité est détecté, lié en l'occurrence à l'ouverture du colis passager, une alerte sous forme d'un signal peut être envoyée à une unité distante (celle d'un fabricant et/ou celle d'un lieu de collecte pour le recyclage des objets). Pour cela, le colis cargo comprend des moyens de communication et l'unité informatique est paramétrée pour collecter les données relatives à l'étanchéité et, plus particulièrement, relatives à l'ouverture du colis passager.

A l'aide des moyens de communication du colis cargo, l'unité informatique peut donc émettre, à la destination de l'unité distante, et par l'intermédiaire des moyens de communication, des données complémentaires parmi lesquelles :
- une température dans le colis passager ;
- un poids du ou des objets ;
- un degré d'hygrométrie dans le colis passager ;
- une pression dans le colis passager ;
- un choc subit par le colis passager.

Bien entendu, dans ce cas, le colis cargo intègre les capteurs ad-hoc pour les prises de mesures des données complémentaires.

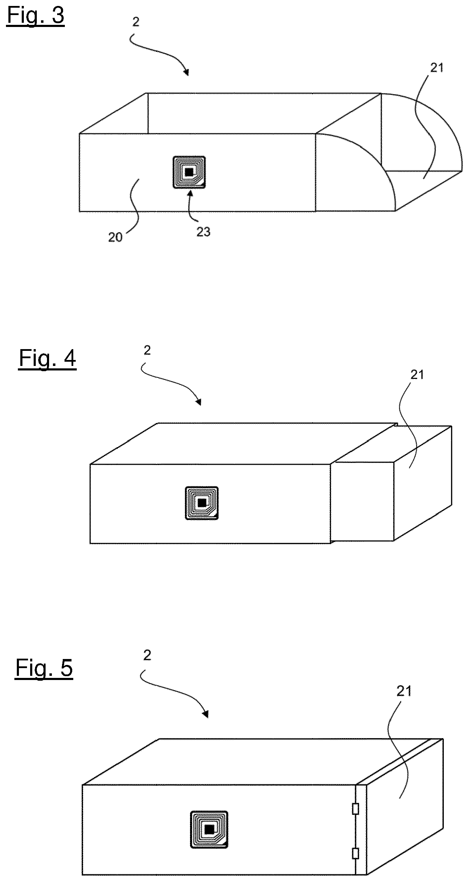

On note que le colis passager peut prendre différentes formes, et notamment celles illustrées par les figures 3 à 6.

Tel qu'illustré par la figure 3, les moyens de fermeture peuvent prendre la forme d'un volet pivotant, présent à une extrémité du contenant 20 prenant en l'occurrence une forme parallélépipédique.

Les moyens de fermeture 21 peuvent prendre la forme d'un tiroir coulissant à l'intérieur du contenant, tel qu'illustré par la figure 4.

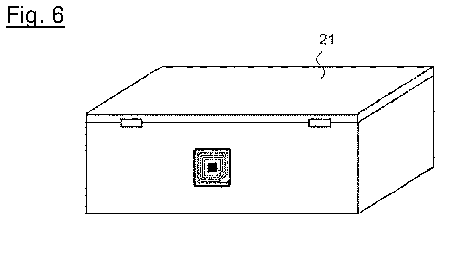

Les moyens de fermeture 21 peuvent prendre la forme d'un couvercle couplé mécaniquement à l'extrémité du contenant 20 parallélépipédique, tel qu'illustré par la figure 5, ou sur le dessus du contenant tel qu'illustré par la figure 6.

On note que le colis passager peut avoir des dimensions et une forme adaptée pour s'emboîter dans le colis cargo, ceci en étant au contact de chacune des parois internes du colis cargo. De cette façon, le colis passager est directement calé à l'intérieur du colis cargo, contre les parois internes de celui-ci. Bien entendu, ce mode de réalisation de réalisation n'est pas exclusif d'autres moyens de calage intégrés dans le colis cargo.

Selon un autre exemple, le colis passager peut être formé par un sac souple, par exemple plastifié, qui définit la cavité destinée à recevoir le ou les objets. Dans ce cas, les moyens de fermeture peuvent par exemple être formés par un film adhésif apposé sur le sac préalablement replié sur lui-même pour refermer une ouverture permettant l'accès à la cavité. Les moyens de fermeture peuvent aussi être constitués par un pan excédentaire du matériau formant le sac et destiné à être rabattu sur l'ouverture puis collé sur le sac souple.

## Revendications

1. Système d'acheminement d'un objet, mettant en œuvre :
- au moins un colis passager (2) comprenant un contenant (20) et des moyens de fermeture (21) pouvant adopter, avec le contenant, une configuration de fermeture ou une configuration d'ouverture, le colis passager comprenant également un dispositif de détection (22) de la configuration de fermeture ou d'ouverture du colis passager,
- un colis cargo (1) apte à contenir le ou les colis passagers (2) et présentant un dispositif d'affichage (10) électronique consultable depuis l'extérieur du colis cargo (1), et incluant une unité informatique (11) paramétrée pour transmettre des consignes d'affichage au dispositif d'affichage (10) électronique,
**caractérisé en ce que** le ou les colis passagers (2) portent au moins une radio-étiquette (23) contenant une information d'adresse postale à laquelle l'objet est destiné,
et **en ce que** le colis cargo (1) comprend un émetteur-récepteur de proximité (12), apte à communiquer avec la radio-étiquette (23) et étant paramétré pour lire l'information d'adresse postale, l'unité électronique (11) du colis cargo (1) étant apte à coopérer avec dispositif de détection (22) du ou des colis passager (2), l'unité informatique (11) étant paramétrée pour autoriser un affichage, par le dispositif d'affichage (10), de l'information d'adresse postale à réception, par l'unité informatique, d'une information de fermeture par le dispositif de détection (22), le colis cargo intégrant un moyen de calage et/ou de maintien du colis passager.

2. Système d'acheminement d'un objet selon la revendication 1, **caractérisé en ce que** l'émetteur-récepteur de proximité (12) est un lecteur RFID.

3. Système d'acheminement d'un objet selon la revendication 1, **caractérisé en ce que** l'émetteur-récepteur de proximité (12) est un lecteur NFC.

4. Système d'acheminement d'un objet selon l'une quelconque des revendications 1 à 3, **caractérisé en ce que** le dispositif de détection (22) est mécanique.

5. Système d'acheminement d'un objet selon l'une quelconque des revendications 1 à 3, **caractérisé en ce que** le dispositif de détection (22) est électronique.

6. Système d'acheminement d'un objet selon l'une quelconque des revendications 1 à 5, **caractérisé en ce que** le ou les colis passager (2) sont hermétiques dans la configuration de fermeture.

7. Système d'acheminement d'un objet l'une quelconque des revendications 1 à 6, **caractérisé en ce que** le ou les colis passagers (2) comprennent au moins un capteur de données complémentaires parmi lesquelles :
- une température dans le colis passager ;
- un poids du ou des objets ;
- un degré d'hygrométrie dans le colis passager ;
- une pression dans le colis passager ;
- un choc subi par le colis passager ;
- un signal d'ouverture du colis passager.

8. Système d'acheminement d'un objet selon la revendication 7, **caractérisé en ce que** le colis cargo (1) comprend des moyens de communication, l'unité informatique (11) étant paramétrée pour collecter les données complémentaires et émettre, à destination d'une unité distante et par l'intermédiaire des moyens de communication, les données complémentaires.
